# EUROPÄISCHE PATENTSCHRIFT

(11) **EP 4 045 404 B1**
(45) Veröffentlichungstag und Bekanntmachung des Hinweises auf die Patenterteilung: **03.09.2025**
(21) Anmeldenummer: 20789987.3
(22) Anmeldetag: 14.10.2020
(51) Int. Cl.: B64D 9/00, B64D 11/06, B64C 1/20, G01M 1/12

(54) **SYSTEM ZUR NUTZLASTÜBERWACHUNG, FLUGZEUG UND VERFAHREN**
USEFUL LOAD MONITORING SYSTEM, AIRCRAFT AND METHOD
SYSTÈME DE SURVEILLANCE DE LA CHARGE UTILE, AÉRONEF ET PROCÉDÉ

(30) Priorität: 16.10.2019 EP 19203609
(43) Veröffentlichungstag der Anmeldung: 24.08.2022
(73) Patentinhaber: Aircraft Cabin Modification GmbH, 87700 Memmingen (DE)
(72) Erfinder: NOSHARI, Arash Hagh Shenas, 22605 Hamburg (DE)
(74) Vertreter: Vossius & Partner Patentanwälte Rechtsanwälte mbB
(86) Internationale Anmeldenummer: PCT/EP2020/078910
(87) Internationale Veröffentlichungsnummer: WO 2021/074228

(56) Entgegenhaltungen:
- US-A- 4 446 524
- US-A1- 2017 283 086
- US-A1- 2017 315 014

## Beschreibung

Die vorliegende Erfindung betrifft ein System zur Nutzlastüberwachung bei einem Flugzeug. Weiterhin betrifft die Erfindung ein Flugzeug und ein Verfahren zum Betreiben eines Flugzeugs.

Hauptzweck von Flugzeugen ist der Transport von Nutzlast. Die Nutzlast muss dabei im Flugzeug aufgenommen und verteilt werden. Durch eine Gewichtsverteilung der Nutzlast entsteht ein erheblicher Einfluss auf den Schwerpunkt des Flugzeugs, was dessen Flugeigenschaften wesentlich verändern kann. Üblicherweise wird deshalb zumindest ein Großteil der Nutzlast, wie beispielsweise Gepäck und Fracht, gewogen und ein Beladungsplan für die Anordnung im Flugzeug erstellt. Bei einer entsprechenden Beladung kann so der Einfluss der Nutzlast auf die Flugeigenschaften optimiert werden.

Allerdings kann es zu einer von dem Beladungsplan abweichenden Beladung kommen, beispielsweise durch eine irrtümliche Verteilung von Fracht und Gepäck im Frachtraum des Flugzeugs durch eine Bodenmannschaft. Zudem können auch Teile der Nutzlast nicht bei der Beladung erfasst bzw. gewogen sein worden. Dadurch kann es zu abweichenden Einflüssen auf die Flugeigenschaften kommen, wodurch diese gegebenenfalls schlechter als erwartet sind. Beispielsweise kann bei einer ungünstigen Beladung ein Treibstoffverbrauch während des Fluges erhöht sein. Diese abweichenden Einflüsse können zum Teil erst nach dem Start des Flugzeugs erkannt werden und es kann so auch zu gefährlichen Flugsituationen kommen, wie beispielsweise einem sogenannten "Tailstrike" beim Start. Ebenso kann Nutzlast auch während des Fluges ihre Position im Flugzeug ändern, beispielsweise durch ein Verrutschen. Auch hier kann ein unerwarteter Einfluss auf die Flugeigenschaften entstehen, welcher zu verschlechterten Flugeigenschaften oder sogar einer Gefährdung führen kann.

US 4 446 524 A offenbart eine Gewichtserfassungsvorrichtung, die am Eingang zum Fracht- oder Gepäckraum und in einem Passagierflugzeug an jeder Passagiereingangstür innerhalb des Flugzeugs angeordnet ist. US 2017/315014 A1 offenbart eine Gewichtsüberwachung basierend auf Sensoren, die das Gewicht entsprechender Gepäckstücke von daran angebrachten Etiketten ablesen. US 2017/283086 A1 offenbart ein Flugbesatzungsinformationssystem, das mit Sensoren in Passagiersitzen, Sicherheitsgurten, Ablagetischen und Gepäckfächern gekoppelt ist.

Aufgabe der vorliegenden Erfindung ist es daher, einen Beitrag zur Flugsicherheit und Optimierung von Flugeigenschaften zu leisten.

Diese Aufgabe wird durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft ein System zur Nutzlastüberwachung eines Flugzeugs. Das System kann wenigstens eine Ablagefläche für eine Nutzlast und wenigstens einen Drucksensor aufweisen. Vorzugsweise ist der wenigstens eine Sensor dazu ausgebildet, eine Gewichtskraft und deren Schwerpunkt von auf der Ablagefläche ruhender Nutzlast zu erfassen. Dadurch wird eine Erfassung einer tatsächlichen Nutzlastverteilung ermöglicht. Das System weist als Ablagefläche wenigstens eine Bodenfläche in einem Frachtraum des Flugzeugs auf, so dass das System dazu geeignet ist, die tatsächliche Nutzlastverteilung im Frachtraum zu ermitteln. Damit kann diese Nutzlastverteilung optimiert werden. Ein Einfluss auf die Flugeigenschaften kann so bekannt sein und damit berücksichtigt und/oder optimiert werden. Eine unsichere Ladungsverteilung kann erkannt oder ausgeschlossen werden. Entsprechend können jeweilige Flugeigenschaften und die Flugsicherheit verbessert sein. Ein Drucksensor ist dabei vorteilhaft, da er leicht, robust, platzsparend und energiesparend die Belastung direkt erfassen kann. Zudem ist ein Drucksensor bei dieser Anwendung störungsresistent.

Bei dem Flugzeug kann es sich beispielsweise um ein Passagierflugzeug, ein ziviles Flugzeug und/oder ein Frachtflugzeug handeln. Der Begriff Flugzeug kann hier aber auch eine Bezeichnung für andere Luftfahrzeuge darstellen, wie Zeppeline, Helikopter und Gyrocopter. Die Ablagefläche kann eine Fläche des Flugzeugs sein, beispielsweise eine Bodenfläche und/oder beispielsweise gebildet sein durch eine Bodenplatte. Die Ablagefläche kann beispielsweise jede Fläche sein, auf der Nutzlast abgelegt, abgestellt, stehen oder sitzen kann. Bevorzugt ist die Ablagefläche eine Fläche in einem Innenraum des Flugzeugs, insbesondere in einem Nutzlastraum wie einem Frachtraum oder einer Passagierkabine. Jeweilige Ablageflächen können auch durch seitliche Begrenzungen definiert sein oder aber durch den Sensor selbst. Beispielsweise kann ein Frachtraum mehrere Abteilung haben, die jeweils eine Ablagefläche bilden, und beispielsweise durch Trennwände abgetrennt sein. Der Frachtraum kann aber auch beispielsweise durchgehend sein und jeweilige Sensoren definieren dann eine Unterteilung in verschiedene Ablageflächen.

Die Ablagefläche entspricht einer Bodenfläche in einem Frachtraum eines Flugzeugs, wobei die Bodenfläche in dem Frachtraum bevorzugt mehrere, stärker bevorzugt mindestens drei, Bodenflächenbereiche aufweist und wobei das System mehrere Drucksensoren aufweist, die den mehreren Bodenflächenbereichen jeweils zugeordnet sind, um jeweils die Gewichtskraft und/oder deren Schwerpunkt von auf mehreren Bodenflächenbereichen ruhenden Nutzlasten zu erfassen, wobei einem Bodenflächenbereich ein oder mehrere Sensoren zugeordnet sein können. Bevorzugt ist jede der Bodenflächenbereiche dazu geeignet, mindestens einen Frachtcontainer aufzunehmen.

Bevorzugt umfasst die gesamte Ablagefläche, die mit Drucksensoren derart bestückt ist, dass eine Gewichtskraft und/oder deren Schwerpunkt von auf dieser Ablagefläche ruhender Nutzlast erfasst werden kann, mindestens 20 m², bevorzugt mindestens 50 m² und besonders bevorzugt mindestens 100 m².

Bevorzugt ist das System dazu geeignet, die tatsächliche Nutzlastverteilung im Frachtraum während des Fluges, bevorzugt kontinuierlich, zu ermitteln. Bevorzugt ist das System dazu geeignet, eine Gewichtskraft und/oder deren Schwerpunkt von auf der Ablagefläche ruhender Nutzlast während des Fluges, bevorzugt kontinuierlich, zu erfassen. Bevorzugt ist das System dazu geeignet, eine Gewichtskraft und/oder deren Schwerpunkt von auf der Ablagefläche ruhender Nutzlast während des Beladens des Frachtraums, unmittelbar nach fertiger Beladung des Frachtraums und/oder des Flugzeugs, vor dem Start, bei Erreichen der Reiseflughöhe und/oder vor der Landung zu erfassen. Bevorzugt ist das System dazu geeignet, die tatsächliche Nutzlastverteilung im Frachtraum (40) während des Beladens des Frachtraums, unmittelbar nach fertiger Beladung des Frachtraums und/oder des Flugzeugs, vor dem Start, bei Erreichen der Reiseflughöhe und/oder vor der Landung zu ermitteln.

Mit dem wenigstens einen Drucksensor kann auf der Ablagefläche, insbesondere auf dem wenigstens einen Drucksensor, ruhende Nutzlast erfasst werden. Der Drucksensor kann dabei die Belastung bevorzugt nach Ort und Stärke auflösen. Der Drucksensor kann also dazu ausgebildet sein, auf einer bestimmten Fläche, insbesondere der Ablagefläche, eine Druckverteilung bzw. Belastungsverteilung zu erfassen. Insbesondere kann der Drucksensor dabei eine örtliche Auflösung aufweisen, die es erlaubt, einen auf eine 100 mm² große Fläche (z.B. 10 mm x 10 mm) wirkenden Druck zu erfassen und von einem auf eine entsprechende, angrenzende Fläche zu unterscheiden. Bevorzugt kann der Drucksensor dabei eine örtliche Auflösung aufweisen, die es erlaubt, einen auf eine 25 mm² große Fläche (z.B. 5 mm x 5 mm) wirkenden Druck zu erfassen und von einem auf eine entsprechende, angrenzende Fläche zu unterscheiden. Der Drucksensor kann beispielsweise in oder auf der Ablagefläche eines Nutzlastraums des Flugzeugs angeordnet sein. Der Drucksensor kann einer oder mehreren Ablageflächen zugeordnet sein.

Die erfasste Belastung bzw. Belastungsverteilung kann als Daten vom System ausgegeben werden und/oder vom System angezeigt werden, insbesondere mittels einer Anzeigevorrichtung, wie einem Bildschirm im Cockpit. Eine Übertragung und Anzeige kann auch an einen Computer, ein Tablet, ein Smartphone und/oder eine Smartwatch erfolgen. Die Erfassung kann beispielsweise kontinuierlich, quasi kontinuierlich, intermittierend, nur bei geparktem Flugzeug und/oder nur in bestimmten Fluglagen und/oder bei Turbulenzen oberhalb oder unterhalb eines Schwellwerts erfolgen. Dies kann eine Überwachung über einen gesamten Flug ermöglichen, die Genauigkeit erhöhen und/oder Energie sparen, um eine Erfassung nur nach einer möglichen Ladungsverschiebung durchzuführen.

In weiterer vorteilhafter Ausgestaltung des Systems ist es vorgesehen, dass das System mehrere Drucksensoren aufweist, um jeweils die Gewichtskraft und deren Schwerpunkt von auf mehreren Ablageflächen ruhenden Nutzlasten zu erfassen, wobei einer Ablagefläche ein oder mehrere Sensoren zugeordnet sind. Beispielsweise kann pro Ablagefläche ein Drucksensor oder pro Ablagefläche zwei Drucksensoren oder mehr vorgesehen sein. Einem Drucksensor können aber auch zwei oder mehr Ablageflächen zugeordnet sein, von denen durch den einen Drucksensor die Belastung erfasst wird. Vorzugsweise ist ein jeweiliger Drucksensor immer nur einer Ablagefläche zugeordnet. Im Rahmen dieses Textes wird teilweise nur von einer oder der Ablagefläche und/oder von einem oder dem Drucksensor gesprochen, wobei jeweilige Aussagen dann auch für mehrere Drucksensoren und/oder Ablageflächen gelten, sofern anwendbar. Der Drucksensor kann auch einfach als Sensor bezeichnet werden.

Die jeweilige Nutzlast ist bevorzugt jeweils einer Ablagefläche zugeordnet und kann ein oder mehrere Objekte umfassen. Beispielsweise kann auf einer Ablagefläche ein Koffer ruhen und dieser erfasst werden. Beispielweise können auf einer Ablagefläche aber auch mehrere Koffer ruhen, deren gesamte Gewichtskraft und gemeinsamer Schwerpunkt gemeinsam für die Ablagefläche erfasst wird.

In weiterer vorteilhafter Ausgestaltung des Systems ist es vorgesehen, dass das System eine Auswertvorrichtung aufweist, welche dazu ausgebildet ist, anhand jeweiliger erfasster Gewichtskräfte und Schwerpunkte einen Einfluss der erfassten Nutzlast auf den Gesamtschwerpunkt des Flugzeugs zu bestimmen. Damit kann unmittelbar ein Einfluss der erfassten Nutzlast auf jeweilige Flugeigenschaften berechnet werden. Dies erlaubt entsprechend, eine Trimmung zu optimieren, die Gewichtsverteilung zu optimieren und unsichere Nutzlastverteilung zu erkennen. Dazu kann die Auswertvorrichtung Zugriff auf weitere Daten haben, wie beispielsweise einen Tankfüllstand und eine Fluglage. Zu diesem Zweck kann die Auswertvorrichtung mit entsprechenden Sensoren des Flugzeugs verbunden sein und/oder das System diese zusätzlichen Sensoren aufweisen. Zudem kann der Schwerpunkt des unbeladenen Flugzeugs bekannt sein und bei der Auswertung berücksichtigt werden, beispielsweise hinterlegt in einer Datenbank. Insbesondere kann die Auswertvorrichtung den Einfluss in Abhängigkeit von einem Druckpunkt und/oder Neutralpunkt des Flugzeugs und/oder dessen Tragwerk und/oder Leitwerk bestimmen. Auch die jeweiligen Druckpunkte und Neutralpunkte können mittels jeweiliger Sensoren erfasst und/oder bestimmt werden. Die Auswertvorrichtung kann auch mit diesen entsprechenden Sensoren des Flugzeugs verbunden sein und/oder das System diese Sensoren aufweisen.

In weiterer vorteilhafter Ausgestaltung des Systems ist es vorgesehen, dass die Auswertvorrichtung ferner dazu ausgebildet ist, in Abhängigkeit des bestimmten Einflusses der erfassten Nutzlast auf den Gesamtschwerpunkt des Flugzeugs eine dazu korrespondierende Trimmung des Flugzeugs zu bestimmen. Diese Trimmung kann dabei bezüglich einer oder mehrere Flugeigenschaften optimiert sein, wie beispielsweise eines Luftwiderstands und/oder eines Treibstoffverbrauchs. Zudem kann so die Trimmung bereits vor einem Start günstig eingestellt sein, um beispielsweise eine gefährliche Trimmung beim Start und damit potentiell eine Gefährdung zu vermeiden. Optional weist das System eine Steuervorrichtung auf, welche die bestimmte Trimmung einstellt, insbesondere durch Einstellen eines Anstellwinkels des Höhenleitwerks, Einstellen jeweiliger Höhenruder und/oder Einstellen jeweiliger Trimmruder. Die Trimmung kann also bezüglich der erfassten Nutzlastverteilung automatisch optimiert werden. Alternativ oder zusätzlich kann auch eine Trimmung einer Quer- und/oder Seitensteuerung bestimmt werden. Eventuell kann auch eine Umverteilung der Nutzlast angezeigt werden, beispielsweise um eine ungleiche Nutzlastverteilung in Querrichtung zu ändern. Die bestimmte Trimmung kann alternativ oder zusätzlich auch ausgegeben werden, insbesondere auf einer Anzeige im Cockpit, beispielsweise auf einem Bildschirm eines Flugplanrechners. Die bestimmte korrespondierende Trimmung kann auch als eine Abweichung zu einem üblichen oder anhand eines Beladungsplans des Flugzeugs bestimmten Trimmwert, auch unter Berücksichtigung des Flugplans (Flughöhe, Geschwindigkeit, etc.) bestimmt werden. Diese Informationen können die Cockpitcrew, insbesondere den Piloten, bei der Flugsteuerung und auch bei der Erkennung von Problemen unterstützen. Die Trimmung kann im Verlauf des Fluges fortwährend bestimmt werden, um beispielsweise ein Verrutschen einer Nutzlast zu erfassen und zu kompensieren. Bei starkem Verrutschen kann zusätzlich oder als Trimmung aktiv das Flugzeug von der Steuervorrichtung gesteuert werden, um eine sichere Fluglage beizubehalten und/oder einen unsicheren Flugzustand zu vermeiden oder zu verlassen.

In weiterer vorteilhafter Ausgestaltung des Systems ist es vorgesehen, dass das System eine Auswertvorrichtung aufweist, welche dazu ausgebildet ist, jeweilige erfasste Gewichtskräfte und Schwerpunkte mit jeweiligen vorbestimmten Gewichtskräften und Schwerpunkten zu vergleichen und bei Überschreiten einer Höchstabweichung ein Warnsignal auszugeben. Vorzugsweise ist die Auswertvorrichtung dazu ausgebildet, den bestimmten Einfluss der erfassten Nutzlast auf den Gesamtschwerpunkt des Flugzeugs mit einem vorbestimmten Einfluss der Nutzlast auf den Gesamtschwerpunkt des Flugzeugs zu vergleichen und bei Überschreiten einer Höchsteinflussabweichung das Warnsignal auszugeben. Dadurch kann gewarnt werden, wenn die Nutzlastverteilung im Flugzeug außerhalb zulässiger Grenzen liegt und/oder zu stark von einer erwarteten und/oder vorgegebenen Verteilung abweicht, beispielsweise aufgrund einer falschen Beladung durch die Bodenmannschaft. Auch ein Verlust von Ladung kann so detektiert werden und davor gewarnt und/oder entsprechende Maßnahmen eingeleitet werden. Das Warnsignal kann beispielsweise akustisch und/oder optisch mittels einer Ausgabevorrichtung, beispielsweise einem Bildschirm im Cockpit, ausgegeben werden.

In weiterer vorteilhafter Ausgestaltung des Systems ist es vorgesehen, dass die Auswertvorrichtung dazu ausgelegt ist, die jeweiligen vorbestimmten Gewichtskräfte und Schwerpunkte und/oder den vorbestimmten Einfluss auf den Gesamtschwerpunkt des Flugzeugs in Abhängigkeit von einem Beladungsplan des Flugzeugs zu bestimmen. Entsprechend wird so eine Detektion von einer falschen und/oder unerwünschten Beladung ermöglicht. Es kann so geprüft werden, ob das Flugzeug so wie geplant beladen worden ist.

In weiterer vorteilhafter Ausgestaltung des Systems ist es vorgesehen, dass die jeweiligen vorbestimmten Gewichtskräfte und Schwerpunkte und/oder der vorbestimmte Einfluss auf den Gesamtschwerpunkt des Flugzeugs jeweiligen vorgegebenen Maximalwerten entsprechen. Dadurch kann eine flugzeugtypspezifische zulässige Verteilung bzw. Ungleichverteilung und/oder auch Höchstzuladung in einzelnen Bereichen bzw. auf einzelnen Ablageflächen berücksichtigt werden. Zudem kann so auch eine Maximalbeladung des Flugzeugs selbst berücksichtigt werden. Jeweilige Maximalwerte können flugzeugspezifisch sein, um beispielsweise einen Tailstrike zu vermeiden. Bei Überschreitung entsprechender Grenzen kann so eine Warnung ausgegeben werden.

In weiterer vorteilhafter Ausgestaltung des Systems ist es vorgesehen, dass die jeweiligen vorbestimmten Gewichtskräfte und Schwerpunkte und/oder der vorbestimmte Einfluss auf den Gesamtschwerpunkt des Flugzeugs jeweiligen vorher durch die Auswertvorrichtung bestimmten Werten entsprechen, insbesondere zu einem spezifischen Zeitpunkt wie unmittelbar nach fertiger Beladung des Flugzeugs, vor dem Start oder bei Erreichen der Reiseflughöhe. Die vorherigen Werte können eine dynamische Berücksichtigung ermöglichen, beispielsweise um Ladungsverschiebung bei Turbulenzen zu erkennen und bei einer zu hohen Verschiebung entsprechend zu warnen. Die vorher bestimmten Werte können beispielsweise auch Werte mit einem vorbestimmten Zeitabstand zu einer aktuellen Erfassung sein, wie beispielsweise 5min., 1min,, 30s, 10s oder 1s vorher.

Die jeweiligen vorbestimmten Gewichtskräfte und Schwerpunkte können auch für einzelne Ablageflächen und/oder das Flugzeug mehrfach vergeben sein. Beispielsweise können Maximalwerte für den Flugzeugtyp und/oder vorherige Werte berücksichtigt werden. Bevorzugt wird beim Überschreiten der niedrigsten dieser Werte bereits ein Warnsignal ausgegeben. Es können also alle diese jeweiligen Grenzwerte hinterlegt und/oder bestimmt werden und dann jeweils der relevante kleinste Wert genutzt werden. Die jeweils zulässigen Abweichungen können in Abhängigkeit von den jeweiligen Grenzwerten vorgegeben sein, beispielsweise eine Abweichung um einen bestimmten Prozentsatz, oder auch als Absolutwert.

In weiterer vorteilhafter Ausgestaltung des Systems ist es vorgesehen, dass das System als Ablagefläche wenigstens eine Bodenfläche in einem Frachtraum des Flugzeugs, eine Aufenthaltsfläche für Passagiere in einer Passagierkabine des Flugzeugs, wie ein Gangboden, eine Sitzfläche und/oder eine Rückenlehne, und/oder eine Bodenfläche in einer Toilette, eine Fläche in einer Bordküche, wie eine Abstellfläche für einen Trolley, einen Boden in einem Staufach der Bordküche, beispielsweise zur Aufnahme eines Atlas-Containers, eine Ablagefläche in einer Handgepäckablage über jeweiligen Sitzreihen in der Passagierkabine, und/oder eine Bodenfläche in einem Zugang zu der Bordküche, der Passagierkabine, und/oder dem Frachtraum aufweist. Jeweilige Nutzlasten können entsprechend beispielsweise Passagiere, Fracht, Gepäck, Handgepäck, Verpflegung, Verbrauchsgüter und/oder Gegenstände, welche im Flugzeug verkauft werden, wie Alkoholika und Parfüm, sein. Bevorzugt kann die Nutzlast nicht die Passagiere umfassen und beispielsweise nur leblose Objekte aufweisen.

Das System kann einen zusätzlichen Sensor aufweisen, welcher jeweilige den Zugang passierende Nutzlast wie Container, Trolleys oder auch Frachtcontainer erfasst. Beispielsweise kann die passierende Nutzlast mittels eines Barcodelesegeräts identifiziert werden. So kann die erfasste Gewichtskraft und deren Schwerpunkt der jeweiligen Nutzlast zugeordnet werden und auch bei einem Abstellen an einem anderen Ort korrekt berücksichtigt werden. Dafür kann auch am Zielort ein entsprechender Sensor vorgesehen sein oder die eingebrachte Nutzlast verfolgt und deren Zielort erfasst werden, beispielsweise mit einem weiteren zusätzlichen Sensor des Systems, wie einer Kamera. Insgesamt kann so die Anzahl von Drucksensoren geringer sein und das System somit gegebenenfalls kostengünstiger und leichter.

Das System kann auch einen zusätzlichen Sensor an jeweiligen Ablageflächen aufweisen, welcher dazu ausgebildet ist, die Nutzlast zu identifizieren. Beispielsweise können Barcodelesegeräte auch an jeweiligen Stauräumen einer Bordküche und/oder in dem Frachtraum angeordnet sein, um beispielsweise Frachtcontainer, Atlas-Container und/oder Trolleys zu identifizieren oder auch Gepäckstücke.

Durch die Erfassung von Gewichtskraft und Schwerpunkten kann auch ein Verbrauch im Flugzeug erfasst werden, beispielsweise von Essen, Verkaufsartikeln und Getränken. Dadurch kann ein Lagermanagement implementiert werden, wo nur bedarfsgerecht verbrauchte Güter wieder aufgefüllt werden. Beispielsweise kann in einer Schublade eines Trolleys bei fester Zuordnung einzelner Flaschen zu einem Platz der Drucksensor erfassen, welche Flaschen wie weit geleert wurden und entsprechende Auffüllbestellungen können getätigt werden, insbesondere automatisiert noch vor Landung des Flugzeugs. Auch eine Inventur kann so automatisiert erfolgen und/oder Diebstähle erkannt werden.

In der Handgepäckablage kann jedes Handgepäckstück einzeln erfasst werden durch eine entsprechende Ortsauflösung der Erfassung durch den Drucksensor. Dadurch kann beispielsweise ein Maximalgewichtsüberschreitung einzelner Gepäckstücke in der Handgepäckablage erkannt werden. In Reaktion darauf kann eine Zusatzgebühr erhoben werden und/oder ein solches Gepäckstück in den Gepäckraum bzw. Frachtraum des Flugzeugs gebracht werden, um die Sicherheit zu erhöhen.

In weiterer vorteilhafter Ausgestaltung des Systems ist es vorgesehen, dass das System eine Auswertvorrichtung aufweist, welche dazu ausgebildet ist, in Abhängigkeit von einer Flugzeuglage aus den jeweiligen erfassten Gewichtskräften und deren jeweiligen erfassten Schwerpunkten jeweilige tatsächliche Gewichtskräfte und deren jeweilige tatsächliche Schwerpunkte zu erfassen. Die Flugzeuglage kann die erfasste Gewichtskraft und deren Schwerpunkt beeinflussen. Der Drucksensor kann beispielsweise nur orthogonal auf die Auflagefläche wirkende Druckbelastungen messen. Beispielsweise kann ein geneigtes Flugzeug aber bedeuten, dass die Gewichtskraft nicht mehr orthogonal auf die Ablagefläche wirkt und damit die Messergebnisse verfälschen. Durch eine entsprechende Berücksichtigung der Flugzeuglage können die tatsächlichen Gewichtskräfte der Nutzlast und auch deren jeweilige Schwerpunkte berechnet werden. Entsprechend ist auch ein besserer Rückschluss auf den Einfluss der Nutzlast auf das Flugzeug zu ermitteln. Die Auswertvorrichtung kann dazu ausgebildet sein, die jeweiligen tatsächlichen Gewichtskräfte und deren Schwerpunkte in Abhängigkeit von einer Flugzeuglage und jeweiliger erfasster Gewichtskräfte und deren Schwerpunkte zu ermitteln.

Die Flugzeuglage kann als eine räumliche Ausrichtung des Flugzeugs definiert sein und damit auch von jeweiligen Ablageflächen. Die Flugzeuglage kann insbesondere eine Fluglage sein oder auch ein Stehen auf dem Fahrwerk, beispielsweise in Parkposition. Die Flugzeuglage kann auch Beschleunigungen des Flugzeugs mit umfassen oder diese können zusätzlich bei der Erfassung jeweiliger tatsächliche Gewichtskräfte und deren jeweiliger tatsächlicher Schwerpunkte berücksichtigt werden. Die Flugzeuglage kann beispielsweise durch ein Gyroskop erfasst werden und/oder durch andere Sensoren, wie ein Anstellwinkelsensor. Die Auswertvorrichtung kann mit diesen Sensoren verbunden sein oder zu einer solchen Verbindung ausgebildet sein, wobei das System zudem auch diese Sensoren aufweisen kann.

In weiterer vorteilhafter Ausgestaltung des Systems ist es vorgesehen, dass das System wenigstens einen in oder auf einer eine jeweilige Ablagefläche seitlich begrenzende Seitenfläche angeordneten Drucksensor aufweist, wobei der wenigstens eine, seitlich angeordnete Sensor dazu ausgebildet ist, die Gewichtskraft und deren Schwerpunkt von auf der Seitenfläche abgestützter Nutzlast zu erfassen. Dadurch können auch Kraftanteile berücksichtigt wirken, welche nicht auf die Ablagefläche wirken. Insbesondere können so auch ohne Kenntnis der Flugzeuglage tatsächliche Gewichtskräfte und deren Schwerpunkte bestimmt werden. Auch bei irregulär geformten Nutzlasträumen kann so der Einfluss der darin angeordneten Nutzlast auf das Flugzeug vollständig erfasst werden. Beispielsweise kann eine schräge Seitenwand im Rumpf bei Stapelung von Gepäck nach Art eines Trichters die Gepäckstücke halten und deren vollständiges Gewicht so präzise ermittelt werden.

In weiterer vorteilhafter Ausgestaltung des Systems ist es vorgesehen, dass wenigstens einer der jeweiligen Drucksensoren als Flächensensor ausgebildet ist, insbesondere als textiler Flächensensor. Ein Flächensensor ist eine kostengünstige und leichte Möglichkeit, eine Gewichtskraft und deren Schwerpunkt auf einer Fläche zu erfassen. Ein textiler Flächensensor ist robust und kann einfach auch bei irregulär geformten Flächen zum Einsatz kommen. Ein Flächensensor kann vorteilhafterweise eine Flächenbelastung erfassen. Ein textiler Flächensensor kann zudem gleichzeitig eine Oberfläche der Ablagefläche bilden, beispielsweise nach Art eines Bodenteppichs oder eines Sitzbezugs. Dadurch ist der Sensor dort platzsparend integriert und/oder es kann auf eine separate Oberflächenschicht verzichtet werden, womit das System und auch das Flugzeug leicht und kostengünstig sein kann. Bevorzugt ist der textile Flächensensor als kapazitiver textiler Flächensensor, resistiver textiler Flächensensor oder textiler Flächensensor mit Transmittererfassung ausgebildet.

Der Drucksensor kann beispielsweise auch als ein mechanischer und/oder induktiver Näherungssensor, als Piezokristall oder Druckluftschlauch ausgebildet sein. Als Drucksensor kann beispielsweise auch ein Reed-Schalter oder Hall-Sensor genutzt werden.

Der textile Drucksensor kann beispielsweise durch zwei kapazitive Drähte gebildet sein, welche bspw. durch ein 3D-Textil voneinander beabstandet sind, in oder an welchem diese verbunden sind. Durch einen Druck auf das Textil wird dabei der Abstand reduziert, was zu einer erfassbaren Kapazitätsänderung führt. Der Flächensensor kann auch durch die Verwendung eines leitfähigen Garns als Elektrode und einen Schaumstoff als Dielektrikum gebildet sein. Der Flächensensor kann matrixförmig aufgebaut sein, um eine Ortsauflösung der Erfassung zu ermöglichen. Der Drucksensor kann eine Analysevorrichtung umfassen, welche jeweilige Sensorsignale auswertet. Auch ein Mischen jeweiliger unterschiedlicher Sensorarten bei mehreren vorgesehenen Drucksensoren ist möglich, um deren jeweiligen Vorteile je nach Position gezielt nutzen zu können und/oder die Messgenauigkeit zu verbessern.

Ein kapazitiver textiler Flächensensor ermöglicht eine besonders präzise Sitzbelastungs- bzw. Druckbestimmung auch bei hohen Belastungen. Insbesondere können auch noch bei Belastungen von mehr als 5 kg deren Ort präzise bestimmt werden. Der kapazitive textile Flächensensor ist beispielsweise vorteilhaft bei hohen Belastungen, wie im Frachtraum oder auf Flugzeugsitzen. Kapazitive textile Flächensensoren lassen sich dabei besonders einfach und gewichtssparend in Flugzeugsitzen integrieren. Zudem hat ein kapazitiver Flächensensor einen besonders geringen Stromverbrauch.

Ein resistiver textiler Flächensensor erfasst eine Druckbelastung aufgrund einer Änderung eines Übergangswiderstands zwischen zwei Sensorfäden. Ein resistiver Flächensensor kann besonders präzise und hochauflösend auch geringe Kräfte erfassen und eignet sich daher besonders für die Handgepäckfächer über jeweiligen Sitzreihen und Erfassungen in der Bordküche.

Ein textiler Flächensensor mit Transmittererfassung kann durch Einspeisung eines Wechselspannungssignals mit definierter Frequenz bei einer sendenden Textillage arbeiten. Dies wird von einer empfangenden Textillage empfangen, wobei ein Abstand beispielsweise die Signalstärke beeinflusst. Dieser kann sich unter Druckbelastung ändern. Vorzugsweise ist zwischen Empfängerlage und Senderlage eine Abstandslage angeordnet, welche sich unter Einwirkung einer Kraft verformt. Diese kann beispielsweise als Abstandsgewirk, Schaum oder Elastomer ausgebildet sein. Ein textiler Flächensensor eignet sich besonders für großflächige Bereiche und komplizierte Geometrien.

Ein Sensor mit Kompressionskonzept ist beispielsweise ein Druckschlauch mit Messgerät des Drucks an einem Ende. Eine Komprimierung und dadurch entstehender Überdruck aufgrund einer Belastung kann so erfasst werden. Bei einem textilen Anteil kann der Druckkörper durch das Textil in einem Ausgangszustand gehalten werden. Geeignet ist dabei beispielsweise ein Abstandsgewirk. Die Oberfläche eines solchen Sensors kann geschlossen sein und damit leicht abwischbar und desinfizierbar. Damit ist der Sensor gut geeignet für Arbeitsflächen in der Bordküche und solche Flächen, die verschmutzt werden können, wie eine Ablage auf einem Trolley. Außerdem können weiche Materialien für sensible Anwendungen genutzt werden. Beispielsweise kann der Sensor auch gut bei einem Flugzeugbett genutzt werden, wobei ein Abstandsgewirk auch die elastische Federung des Bettes bilden kann.

In weiterer vorteilhafter Ausgestaltung des Systems ist es vorgesehen, dass das System wenigstens eine Datenbankvorrichtung zum Speichern jeweiliger erfasster Werte und/oder jeweiliger Auswertungen aufweist, insbesondere als zeitlicher Verlauf. Dadurch stehen die Werte für eine spätere Beurteilung und Verbrauchsprognosen und Logistikprognosen, beispielsweise bezüglich Gütern in der Bordküche und dem Bordshop, zur Verfügung. Ebenso kann analysiert werden, welche Bodenmannschaften besonders zuverlässig arbeiten. Zudem können mit so gespeicherten Daten bei dem Flughafen Regressforderungen geltend gemacht werden, beispielsweise bei einer nicht sachgerechten Beladung gemäß Beladungsplan und dadurch verursachtem erhöhtem Treibstoffverbrauch. Auch eine Materialermüdung jeweiliger Ablageflächen oder anderer Flugzeugteile kann durch gespeicherte Daten prognostiziert oder bestimmt werden. Jeweilige Auswertungen können beispielsweise Bestimmungen und/oder Berechnungen der Auswertvorrichtung betreffen.

In weiterer vorteilhafter Ausgestaltung des Systems ist es vorgesehen, dass das System wenigstens eine Übertragungsvorrichtung zum Speichern jeweiliger erfasster Werte und/oder jeweiliger Auswertungen aufweist, insbesondere mittels Funk. Dadurch können diese Daten am Boden genutzt werden und in Vorrichtungen extern zum Flugzeug. Insbesondere können so diese Daten bereits vor der Landung weiterverarbeitet werden, beispielsweise um automatisch eine Bestellung und/oder Wiederauffüllung von Verbrauchsmaterial in der Bordküche zu veranlassen.

Ein zweiter Aspekt der Erfindung betrifft ein Flugzeug mit einem System gemäß dem ersten Aspekt der Erfindung, insbesondere ein ziviles Passagierflugzeug mit dem System gemäß dem ersten Aspekt der Erfindung. Die sich aus dem System gemäß dem ersten Aspekt ergebenden Merkmale und Vorteile sind der Beschreibung des ersten Aspekts zu entnehmen, wobei vorteilhafte Ausgestaltungen des ersten Aspekts als vorteilhafte Ausgestaltungen des zweiten Aspekts und umgekehrt anzusehen sind.

Ein dritter Aspekt der Erfindung betrifft ein Verfahren zum Betreiben eines Flugzeugs, insbesondere mit einem System gemäß dem ersten Aspekt und/oder zum Betreiben eines Flugzeugs gemäß dem zweiten Aspekt. Bei dem Verfahren wird wenigstens eine Gewichtskraft und deren Schwerpunkt von auf einer Ablagefläche eines Nutzlastraums des Flugzeugs angeordneter Nutzlast erfasst.

Das Verfahren eignet sich dabei dazu, das System gemäß dem ersten Aspekt zu steuern oder zu betreiben und/oder das Flugzeug gemäß dem zweiten Aspekt. Die sich aus dem System gemäß dem ersten Aspekt und aus dem Flugzeug gemäß dem zweiten Aspekt ergebenden Merkmale und Vorteile sind der Beschreibung des ersten und des zweiten Aspekts zu entnehmen, wobei vorteilhafte Ausgestaltungen des ersten und des zweiten Aspekts als vorteilhafte Ausgestaltungen des dritten Aspekts und umgekehrt anzusehen sind.

In weiterer vorteilhafter Ausgestaltung des Verfahrens weist dieses ferner optional wenigstens einen der folgenden Schritte auf:
- Ausgabe jeweiliger erfasster Werte;
- Anzeige jeweiliger erfasster Gewichtskräfte und deren Schwerpunkte;
- Ausgabe einer Warnung in Abhängigkeit von jeweiligen erfassten Gewichtskräfte und deren Schwerpunkten;
- Einstellen einer Trimmung des Flugzeugs in Abhängigkeit von jeweiligen erfassten Gewichtskräfte und deren Schwerpunkten;
- Startfreigabe oder Startverbot in Abhängigkeit von jeweiligen erfassten Gewichtskräfte und deren Schwerpunkten;
- Neuanordnung jeweiliger Nutzlast in dem Flugzeug in Abhängigkeit von jeweiligen erfassten Gewichtskräfte und deren Schwerpunkten;
- Verbrauchsgütermanagement in Abhängigkeit von jeweiligen erfassten Gewichtskräfte und deren Schwerpunkten;
- Speichern und/oder Übertragen jeweiliger erfasster Werte und/oder jeweiliger Auswertungen.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehenden in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

### Figurenbeschreibung

- Fig. 1: veranschaulicht in einer schematischen Darstellung ein System zur Nutzlastüberwachung eines Flugzeugs.
- Fig. 2: zeigt in einer schematischen Schnittansicht von oben teilweise ein Passagierkabine eines Flugzeugs mit dem System nach Fig. 1.
- Fig. 3: zeigt in einer schematischen Schnittansicht von oben teilweise einen Frachtraum des Flugzeugs nach Fig. 2.

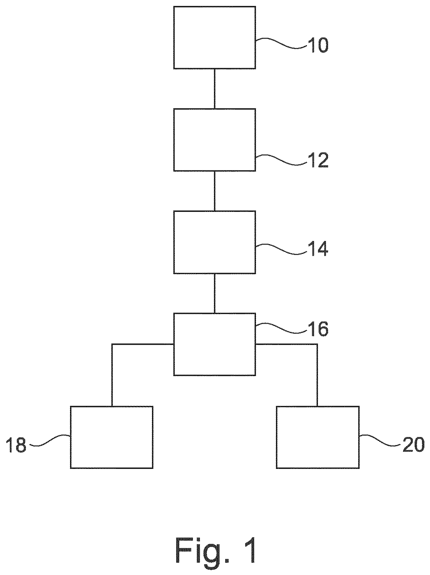

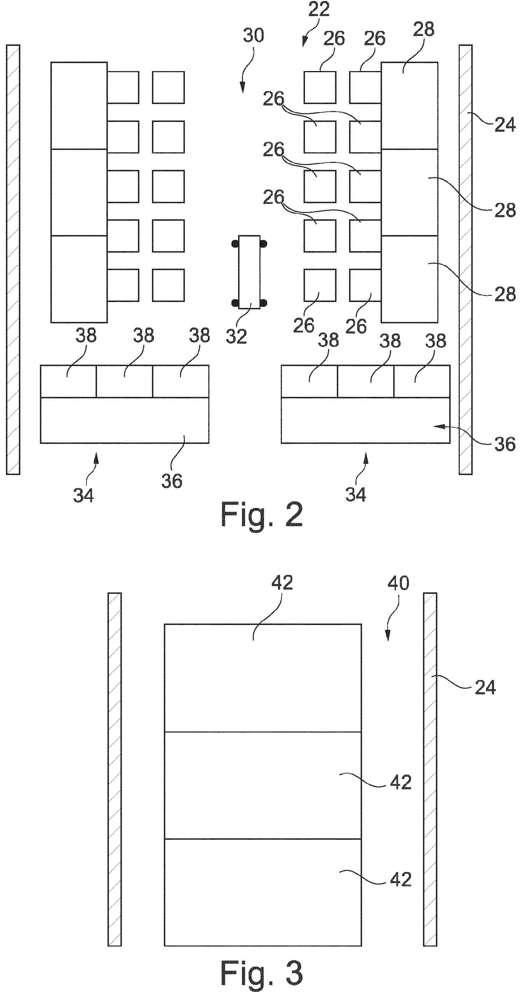

Fig. 1 veranschaulicht in einer schematischen Darstellung ein System zur Nutzlastüberwachung eines Flugzeugs. Das System weist wenigstens einen Drucksensor 10 auf, welcher vorliegend als textiler Flächensensor ausgebildet ist. Dessen Anordnung im Flugzeug wird noch näher anhand der Figuren 2 und 3 beschrieben. Der Drucksensor 10 kann beispielsweise mit einem Bordnetz des Flugzeugs verbunden sein oder auch eine autonome Stromversorgung aufweisen, wie beispielsweise eine Batterie. Alternativ kann der Drucksensor 10 auch dazu ausgebildet sein, passiv zu arbeiten und keine Stromversorgung zu benötigen. Das System kann auch eine Vielzahl von Drucksensoren 10 aufweisen, welche beispielsweise jeweils einer unterschiedlichen Ablagefläche für Nutzlast des Flugzeugs zugeordnet sind.

Der Drucksensor 10 ist dazu ausgebildet, eine Gewichtskraft und optional deren Schwerpunkt von auf einer Ablagefläche, welcher der Drucksensor 10 zugeordnet ist, ruhender Nutzlast zu erfassen. Die Gewichtskraft kann eine Kraft sein, mit welcher die Nutzlast aufgrund der Schwerkraft auf die Ablagefläche drückt. Aufgrund der Größe und der Verteilung der Nutzlast ergibt sich dabei eine Gewichtskraftverteilung, welche der Drucksensor 10 erfassen kann. Beispielsweise kann der Drucksensor 10 dazu ausgebildet sein, an mehreren Stellen an der Ablagefläche eine Kraft zu messen. Diese kann aggregiert werden, um eine Gesamtkraft, welche auf die Ablagefläche wirkt, zu bestimmen. Gleichzeitig werden diese ausgewertet, um zu bestimmen, an welcher Stelle die aggregierte Gesamtkraft angreift, um jeweilige Hebelarme der Gewichtskraft der Nutzlast auf der Ablagefläche bestimmen zu können.

Jeweilige Sensorsignale des Drucksensors 10 können durch ein A/D-Wandler 12 des Systems gewandelt werden. Die Sensorsignale können dann von einem Datenübertragungsmodul 14 an eine Auswertvorrichtung 16 und/oder einen flugzeugexternen Empfänger übertragen werden. Die Datenübertragung kann beispielsweise drahtgebunden oder drahtlos sein, beispielsweise mittels Funk. Es kann eine Datenübertragung mittels WLAN vorgesehen sein, welche ein bestehendes Bord-WLAN nutzen kann, mittels Bluetooth Low Energy, wodurch der Stromverbrauch sehr gering sein kann, oder auch beispielsweise mittels RFID-Technologie. Mittels der Auswertvorrichtung 16 kann die von dem Drucksensor 10 erfasste Gewichtskraft und deren Schwerpunkt ausgewertet werden, beispielsweise um einen Einfluss der erfassten Nutzlast auf den Gesamtschwerpunkt des Flugzeugs zu bestimmen. Dadurch ist es möglich, zu überprüfen, ob die erfasste Nutzlast einer erwarteten Nutzlast und auch deren geplanter Anordnung im Flugzeug entspricht. Damit ist es möglich, eine Trimmung des Flugzeugs zu verbessern und/oder unsichere Flugzustände zu vermeiden.

Die jeweiligen Sensorsignale und die Ergebnisse der Auswertung durch die Auswertvorrichtung 16 können beispielsweise an eine Datenbankvorrichtung 18 übertragen werden, um von dieser gespeichert zu werden. Damit können diese Daten für eine spätere Auswertung zur Verfügung stehen. Alternativ oder zusätzlich können die jeweiligen Sensorsignale und Ergebnisse der Auswertung an eine Ausgabevorrichtung 20 übertragen werden, welche beispielsweise die Nutzlastverteilung im Cockpit des Flugzeugs anzeigt. Dadurch stehen diese Daten der Besatzung des Flugzeugs zur Verfügung, wodurch diese entsprechend auf eine ungünstige Nutzlastverteilung und/oder eine Überschreitung einer Maximalzuladung reagieren kann.

Die Ausgabevorrichtung 20 bzw. Anzeige kann das eigentliche Interface zum Piloten und jeweiligen Flugbegleitern sein. Es kann die Beladung zum Beispiel durch eine "Rot - Gelb - Grün" Ampel für die Flugbegleitung dargestellt werden. Die exakten Flächen, jeweilige Nutzlastgewichte sowie das Gesamtgewicht und der resultierende Schwerpunkt können für den Piloten und/oder den Ramp Agent bereitgestellt werden. Zusätzlich kann ein Beladungsplan angezeigt werden, um einen Vergleich zu einer gewünschten Beladung zu haben. Bei entsprechend hohen Abweichungen über vorgegebenen Schwellwerten werden Ablageflächen gelb oder rot dargestellt. Auch diese Bewertung kann durch die Auswertvorrichtung 16 erfolgen.

Fig. 2 zeigt in einer Oberansicht geschnitten teilweise eine Passagierkabine 22 eines Passagierflugzeugs. Diese Passagierkabine 22 ist durch einen Rumpf 24 begrenzt. In der Passagierkabine 22 sind mehrere Sitzreihen mit jeweiligen Flugzeugsitzen 26 angeordnet. Über jeweiligen Sitzreihen sind Handgepäckablagen 28 angeordnet. Zwischen den Sitzreihen verläuft ein Gang 30, auf welchem ein Trolley 32 steht. Zudem ist in der Passagierkabine 22 eine Bordküche 34 angeordnet, welche zwei Arbeitsflächen 36 und mehrere Staufächer 38 aufweist, in welchen beispielsweise jeweilige Atlas-Container mit Verpflegung für die Passagiere verstaut werden können. Unterhalb der Arbeitsflächen 36 ist beispielsweise auch ein Stauraum für den Trolley 32 vorgesehen.

Fig. 3 zeigt in einer Oberansicht geschnitten teilweise einen Frachtraum 40 des Flugzeugs. Auch der Frachtraum 40 ist durch den Rumpf 24 begrenzt. Der Frachtraum 40 weist eine Bodenfläche auf, welche vorliegend in drei Bodenflächenbereiche 42 für das Abstellen jeweils eines zugeordneten Frachtcontainers unterteilt ist. Alternativ oder zusätzlich kann der Frachtraum 40 beispielsweise auch zur Aufnahme von losen Gepäckstücken oder anderen Gegenständen ausgebildet sein.

Die oben genannten Flächen können mittels des Systems zur Nutzlastüberwachung überwacht werden. Entsprechend können jeweils zugeordnete Drucksensoren 10 vorgesehen sein, welche jeweils eine Gewichtskraft und deren Schwerpunkt von auf den oben genannten Ablageflächen ruhender Nutzlast erfassen. Beispielsweise kann also die Gewichtskraft und deren Wirkort von jeweiligen Passagieren auf den Sitzen 26 und dem Gang 30 erfasst werden. Ebenso kann eine Ablagefläche der Handgepäckablagen 28 jeweils ein textiler Flächensensor als Drucksensor 10 aufweisen. Damit kann das Gewicht und der Ort jeweiliger Gepäckstücke in den Handgepäckablagefächern 28 erfasst werden. Dabei kann auch festgestellt werden, ob ein Handgepäckstück ein zulässiges Höchstgewicht überschreitet und die Besatzung entsprechend darauf aufmerksam gemacht werden. Dadurch kann eine Gefährdung durch herabfallendes Handgepäck minimiert werden.

Auch in der Bordküche 34 kann die Nutzlast überwacht werden. Dafür kann beispielsweise jeweils ein Drucksensor 10 auf den Arbeitsflächen 36 vorgesehen sein. Damit kann beispielsweise auch erfasst werden, ob dort noch lose Gegenstände lagern und die Besatzung im Falle von Turbulenzen und/oder vor einer Landung und einem Start darauf aufmerksam gemacht werden. Damit kann diese Nutzlast gesichert werden. Ebenso kann die Nutzlast in den Staufächern 38 durch entsprechende Drucksensoren 10 erfasst werden. Dadurch kann automatisch kontrolliert werden, ob die Bordverpflegung geladen wurde. Nach Abschluss des Fluges kann ebenso ein Verbrauch erfasst werden und entsprechend automatische Nachbestellungen getätigt werden. Durch einen Drucksensor 10 an der Bodenfläche für den Trolley 32 kann ähnliches auch bei der Befüllung des Trolleys 32 erfasst werden. Darüber hinaus kann auch hier gewarnt werden, falls ein Trolley 32 nicht ordnungsgemäß verstaut wurde. Auch bei dem Trolley 32, welcher ebenfalls Teil des Systems zur Nutzlastüberwachung sein kann, können jeweilige Drucksensoren 10 vorgesehen sein. Dadurch kann beispielsweise, insbesondere bei entsprechend hoher Auflösung der Druckverteilung, erfasst werden, welche jeweiligen Verbrauchsgüter bei dem Trolley 32 zu welchem Ausmaß verbraucht wurden. Beispielsweise kann so erfasst werden, dass eine Limonade verbraucht wurde und nachgefüllt werden muss, während Wasser noch ausreichend vorhanden ist.

Darüber hinaus kann das System 10 durch die Erfassung der Gewichtskräfte und deren Schwerpunkte von den jeweiligen Nutzlasten einen Einfluss auf den Gesamtschwerpunkt des Flugzeugs bestimmen. Dies kann zum einen durch eine entsprechende Trimmung berücksichtigt werden oder auch dazu benutzt werden, um eine Nutzlast vor einem Start oder nach einem Bewegen wieder wie gewünscht zu platzieren. Außerdem ist so eine Überwachung einer korrekten Beladung möglich. Beispielsweise kann eine falsche Beladung mit schwerer Fracht im Frachtraum 40 andernfalls beim Starten zu einem Tailstrike des Flugzeugs führen. Mit dem System zur Nutzlastüberwachung kann also eine unsachgemäße Beladung noch vor dem Beginn des Fluges erkannt werden. Allerdings kann auch während des Fluges ein ungewolltes Verschieben von Nutzlast, beispielsweise aufgrund von Turbulenzen, erkannt werden. Gegebenenfalls kann die Nutzlast gesichert und/oder an die richtige Stelle verschoben werden. Außerdem kann eine ungewollte Verschiebung dem Piloten angezeigt werden, welche diesem bei der Fehlersuche bei einem ungewöhnlichen Flugverhalten des Flugzeugs helfen kann. Beispielsweise kann der Pilot so besser erkennen, ob sich eine Nutzlast verschoben hat oder eine der Steuerflächen des Flugzeugs beschädigt ist.

Der aus der Nutzlastverteilung im Flugzeug resultierende Schwerpunkt ist wichtig für Flugeigenschaften und Sicherheit. Beispielsweise kann eine ungünstige Gewichtsverteilung der Nutzlast eine starke Trimmung des Flugzeugs erfordern, wodurch dessen Treibstoffverbrauch während des Fluges erhöht sein kann. Durch eine umfangreiche Erfassung möglichst vieler Ablageflächen mittels jeweiliger Drucksensoren 10 kann dieser Einfluss sehr genau erfasst werden. Alternativ können aber auch nur die wichtigsten Ablageflächen mit den schwersten zu erwartenden Lasten mittels jeweiliger Drucksensoren 10 überwacht werden. Beispielsweise kann lediglich der Frachtraum 40 entsprechend überwacht werden. Dadurch kann das System besonders leicht und kostengünstig sein.

Die sichere Reise mit dem Flugzeug ist die wichtigste Anforderung in der Luftfahrt. Aufgrund der immer höheren Anforderung an die Produktivität und somit immer geringeren Bodenzeit für Flugzeuge muss die Beladung sicher und zuverlässig erfolgen können. Deshalb wird vor jedem Flug üblicherweise genau ermittelt, in welche Sektionen welche Fracht verladen werden soll. Ob das jedoch richtig umgesetzt wird, kann von der Bodenmannschaft in der Regel gar nicht oder nicht schnell genug geprüft werden. Die Piloten berechnen anhand der vorher definierten Beladung in den Ladezonen die Balance vom Flieger. Entsprechend wird die Trimmung eingestellt und das Einhalten von Grenzwerten geprüft. Dabei muss sich die Besatzung bzw. der Pilot jedoch darauf verlassen, dass das Flugzeug auch wie geplant beladen wurde. Durch das hier beschriebene System kann stattdessen eine tatsächliche Kontrolle erfolgen und die Sicherheit und Effizienz im Luftverkehr erhöht werden.

Beim Start oder auch bei starken Turbulenzen kann es durch die Kräfte zu einem Verrutschen der Ladung kommen. Auch dies kann durch das hier beschriebene System erfasst werden, um entsprechend zielgerichtete Gegenmaßnahmen zu ermöglichen.

Das hier beschriebene intelligente Überwachungssystem der Ladungskontrolle ist in der Lage, den Schwerpunkt des jeweils überwachten Raums bzw. der jeweils überwachten Ablagefläche für Nutzlast in den Flächenkoordinaten des Flugzeugs zu ermitteln und diese beispielsweise an das Cockpit und/oder ein Tablet weiter zu leiten.

Ebenso kann das intelligente Ladungsüberwachungssystem den Inhalt von Behältern in der Bordküche, Containern, Trolleys, und/oder Küchenbehältern überwachen und Wartungszeiten reduzieren, da eine Catering Crew im Vorfeld über die aufgebrauchten Güter via Fernübertragung und/oder Tablet in Kenntnis gesetzt werden kann. Dadurch kann die Beladung mit Verbrauchsgütern optimiert und jeweilige Cateringkosten reduziert werden.

Das System kann auch zur sogenannten Pantry Code Überwachung eingesetzt werden. Jede Catering Beladung bzw. Zusammensetzung von Verbrauchsgütern hat einen Pantry Code.

Dieser Code erlaubt beispielsweise Rückschlüsse auf Gewicht und Art der jeweiligen Beladung. So kann beispielsweise auf ein Wiegen der Catering-Beladung verzichtet werden. Stattdessen kann beispielsweise einmal eine Beladung für einen bestimmten Flug festgelegt werden und der Flieger immer mit dieser Catering Beladung beladen werden. Dabei ist ein Nominalgewicht dieser Beladung bekannt, beispielsweise 1,5 Tonnen. Ob jetzt jede Catering Beladung richtig beladen und/oder bereitgestellt wurde, kann dann durch das System abschließend im Flieger geprüft werden. Dabei kann das System einen zusätzlichen Sensor aufweisen, um den Pantry Code von jeweiligen Nutzlasten zu erfassen, beispielsweise mittels eines Barcodelesegeräts. Dadurch kann auch diesbezüglich kontrolliert bzw. überwacht werden. Zudem kann so auch berücksichtigt werden, dass beispielsweise die Catering Beladung richtig zusammengesetzt ist, aber an der falschen Stelle im Flugzeug abgestellt wurde. Auch zu einer solchen Prüfung kann die Auswertvorrichtung 16 ausgebildet sein.

Ebenso kann das System Veränderungen im jeweiligen Schwerpunkt des überwachten Raumes während des Fluges an das Cockpit melden. Mit dieser Information können die Piloten bei Bedarf gezielt in die Trimmung des Flugzeugs eingreifen und drohenden Schaden abwenden. Bedingt durch den hohen Anspruch des sicheren Reisens durch Fluggesellschaften sowie der hohen Anschaffungskosten von Flugzeugen besteht der Wunsch einer Minimierung der Ground Time (Standzeit, Turn-Around Zeit, etc.) der Flugzeuge. Das System hat also Vorteile für Fluggesellschaften und Versicherungen.

Das System ist ein Ladungskontroll- und Informationssystem, dass die Gewichtsverteilung in Echtzeit aufzeigen und aufzeichnen kann. Die Nutzlast in einzelnen Bereichen des Flugzeugs wird gewogen. Dies gibt Aufschluss über den jeweiligen Druck pro Fläche sowie den resultierenden Schwerpunkt auf der Fläche der jeweils gemessenen Ablagefläche. Die Daten werden an das Cockpit gesendet und/oder gespeichert, um sowohl der Fluggesellschaft zur Auswertung zur Verfügung zu stellen als auch weiter verarbeitbar und abrufbar zu haben. Beispielsweise können diese Daten auch jeweiligen Flughafenbetreibern zur Verfügung gestellt werden, insbesondere verkauft werden, um die Arbeit jeweiliger Bodenmannschaften, wie einer Ladecrew, zu verbessern.

Der jeweilige Ladungszustand der Gepäckräume kann mit einem Signal an den Piloten mitgeteilt werden. Der Pilot kann im Bedarfsfall frühzeitig Maßnahmen einleiten, wie eine Umverteilung von Nutzlast vor dem Start. Die gewonnenen Erkenntnisse können detailliert auf einem Computer, Tablet, Smartphone oder einer Smartwatch nach deren Übertragung dargestellt werden, um eine genauere Auswertung vorzunehmen. Außerdem können sie per Fernübertragung übermittelt werden.

Jeweilige Drucksensoren 10 können als Oberfläche bzw. Belag einer Ablagefläche dienen, wodurch Kosten und Platzbedarf minimiert sein können. Beispielsweise kann ein Teppichboden des Gangs 30 durch einen textilen Flächensensor gebildet werden, womit der Drucksensor 10 im Bodenbelag integriert ist. Mit Hilfe der gewonnen Sensordaten lassen sich die Informationen gewinnen, ob das Gepäck wie vorgesehen verstaut ist oder ob es eine Ladungsverschiebung gibt und/oder gab.

Mit dem System kann auch erfasst werden, wie viele Getränke und/oder Gerichte von welcher Sorte nach Abschluss des Service vorhanden sind, um automatisiert die nachzufüllende Menge beim Caterer anzufordern.

Mittels des Systems zur Nutzlastüberwachung kann Folgendes erreicht und/oder automatisiert werden:
- Ermittlung des Gepäckraumflächenschwerpunkts zur Optimierung des Treibstoffverbrauchs
- Vermeidung eines Tailstrikes
- Ermittlung von verrutschtem Gepäck und Meldung an den Piloten, insbesondere sofortige Meldung
- Genaue Ermittlung der Lagerkapazitäten, sowie automatisierte Nachbestellung
- Analyse des Konsumverhaltens der Passagiere
- Materialermüdung in Abhängigkeit von der Belastung über Lebenszeit
- Optimierung der Trimmung

Der Drucksensor 10 generiert beispielsweise ein eindeutiges Signals (z.B. in Form eines elektrischen Widerstandes), das Rückschlüsse auf die Ladungsposition sowie das Gewicht und den resultierenden Schwerpunkt ermöglicht. Daraus lässt sich die Information ableiten, wie das Gepäck verstaut wurde und ob es über den gesamten Flug seinen Ort beibehalten hat. Eine entsprechende Auswertung kann durch die Auswertvorrichtung 16 erfolgen. Ebenso lässt sich die Information ableiten, ob die Trolleys und/oder Stauräume in der Bordküche richtig und/oder in ausreichendem Maße bestückt sind.

### BEZUGSZEICHENLISTE

- 10: Drucksensor
- 12: A/D-Wandler
- 14: Übertragungsvorrichtung
- 16: Auswertvorrichtung
- 18: Datenbankvorrichtung
- 20: Ausgabevorrichtung
- 22: Passagierkabine
- 24: Rumpf
- 26: Flugzeugsitz
- 28: Handgepäckablage
- 30: Gang
- 32: Trolley
- 34: Boardküche
- 36: Arbeitsfläche
- 38: Stauraum
- 40: Frachtraum
- 42: Bodenflächen

## Patentansprüche

1. Flugzeug mit einem Frachtraum (40), der eine Bodenfläche aufweist, und mit einem System zur Nutzlastüberwachung des Flugzeugs, wobei das System wenigstens eine Ablagefläche (42) für eine Nutzlast, die die Bodenfläche des Frachtraums (40) aufweist, und wenigstens einen Drucksensor (10) aufweist, wobei der wenigstens eine Drucksensor (10) dazu ausgebildet ist, eine Gewichtskraft und/oder deren Schwerpunkt von auf der Ablagefläche (42) ruhender Nutzlast zu erfassen, wobei das System dazu geeignet ist, die tatsächliche Nutzlastverteilung im Frachtraum (40) zu ermitteln, wobei das System ferner dazu geeignet ist, eine Gewichtskraft und/oder deren Schwerpunkt von auf der Ablagefläche (42) ruhender Nutzlast unmittelbar nach fertiger Beladung des Frachtraums und/oder des Flugzeugs, vor dem Start, bei Erreichen der Reiseflughöhe und vor der Landung zu erfassen.

2. Flugzeug nach Anspruch 1, wobei die Bodenfläche in dem Frachtraum (42) mehrere, bevorzugt mindestens drei, Bodenflächenbereiche (42) aufweist und wobei das System mehrere Drucksensoren (10) aufweist, die den mehreren Bodenflächenbereichen (42) jeweils zugeordnet sind, um jeweils die Gewichtskraft und/oder deren Schwerpunkt von auf mehreren Bodenflächenbereichen (42) ruhenden Nutzlasten zu erfassen, wobei einem Bodenflächenbereich (42) ein oder mehrere Sensoren zugeordnet sein können.

3. Flugzeug nach Anspruch 2, wobei jede der Bodenflächenbereiche (42) dazu geeignet ist, mindestens einen Frachtcontainer aufzunehmen.

4. Flugzeug nach Anspruch 2 oder 3, wobei mindestens fünf, bevorzugt mindestens zehn und besonders bevorzugt mindestens 15 Bodenflächenbereiche (42) mit jeweils zugeordneten Drucksensoren (10) vorhanden sind.

5. Flugzeug nach einem der vorhergehenden Ansprüche, wobei die gesamte Ablagefläche, die mit Drucksensoren derart bestückt ist, dass eine Gewichtskraft und/oder deren Schwerpunkt von auf dieser Ablagefläche ruhender Nutzlast erfasst werden kann, mindestens 20 m², bevorzugt mindestens 50 m² und besonders bevorzugt mindestens 100 m² umfasst.

6. Flugzeug nach einem der vorhergehenden Ansprüche, wobei das System dazu geeignet ist, eine Gewichtskraft und/oder deren Schwerpunkt von auf der Ablagefläche (42) ruhender Nutzlast während des Fluges, bevorzugt kontinuierlich, zu erfassen.

7. Flugzeug nach einem der vorhergehenden Ansprüche, wobei das System dazu geeignet ist, die tatsächliche Nutzlastverteilung im Frachtraum (40) während des Beladens des Frachtraums, unmittelbar nach fertiger Beladung des Frachtraums und/oder des Flugzeugs, vor dem Start, bei Erreichen der Reiseflughöhe und/oder vor der Landung zu ermitteln.

8. Flugzeug nach einem der vorhergehenden Ansprüche, wobei das System eine Auswertvorrichtung (16) aufweist, welche dazu ausgebildet ist, jeweilige erfasste Gewichtskräfte und/oder Schwerpunkte mit jeweiligen vorbestimmten Gewichtskräften und/oder Schwerpunkten zu vergleichen und bei Überschreiten einer Höchstabweichung ein Warnsignal auszugeben,
insbesondere wobei die Auswertvorrichtung (16) dazu ausgebildet ist, den bestimmten Einfluss der erfassten Nutzlast auf den Gesamtschwerpunkt des Flugzeugs mit einem vorbestimmten Einfluss der Nutzlast auf den Gesamtschwerpunkt des Flugzeugs zu vergleichen und bei Überschreiten eines Höchsteinflusses das Warnsignal auszugeben.

9. Flugzeug nach einem der vorhergehenden Ansprüche, wobei das System eine Auswertvorrichtung (16) aufweist, welche dazu ausgebildet ist, in Abhängigkeit von einer Flugzeuglage aus den jeweiligen erfassten Gewichtskräften und/oder deren jeweiligen erfassten Schwerpunkten jeweilige tatsächliche Gewichtskräfte und/oder deren jeweilige tatsächliche Schwerpunkte zu erfassen.

10. Flugzeug nach einem der vorhergehenden Ansprüche, wobei das System wenigstens einen in oder auf einer eine jeweilige Ablagefläche (42) seitlich begrenzende Seitenfläche angeordneten Drucksensor aufweist, wobei der wenigstens eine seitlich angeordnete Sensor dazu ausgebildet ist, die Gewichtskraft und/oder deren Schwerpunkt von auf der Seitenfläche abgestützter Nutzlast zu erfassen.

11. Flugzeug nach einem der vorhergehenden Ansprüche, wobei wenigstens einer der jeweiligen Drucksensoren (10) als Flächensensor ausgebildet ist, insbesondere als textiler Flächensensor.

12. Verfahren zum Betreiben eines Flugzeugs, insbesondere eines Flugzeugs nach einem der Ansprüche 1 bis 11, wobei wenigstens eine Gewichtskraft und/oder deren Schwerpunkt von auf einer Bodenfläche in einem Frachtraum (40) des Flugzeugs angeordneter Nutzlast erfasst und basierend darauf die tatsächliche Nutzlastverteilung im Frachtraum (42) ermittelt wird, wobei die Gewichtskraft und/oder deren Schwerpunkt von auf der Ablagefläche (42) ruhender Nutzlast unmittelbar nach fertiger Beladung des Frachtraums und/oder des Flugzeugs, vor dem Start, bei Erreichen der Reiseflughöhe und vor der Landung erfasst wird.

13. Verfahren nach Anspruch 12, wobei die Bodenfläche in dem Frachtraum (42) mehrere, bevorzugt mindestens drei, Bodenflächenbereiche (42) aufweist und wobei für jeden dieser Bodenflächenbereiche (42) wenigstens eine Gewichtskraft und/oder deren Schwerpunkt von einer auf der jeweiligen Bodenflächenbereiche (42) ruhenden Nutzlast erfasst wird, wobei bevorzugt auf mindestens einem, stärker bevorzugt mehreren und besonders bevorzugt allen der Bodenflächenbereiche (42) ein Frachtcontainer abgestellt ist.

14. Verfahren nach einem der Ansprüche 12-13, wobei eine Gewichtskraft und/oder deren Schwerpunkt von auf der Bodenfläche (42) ruhender Nutzlast während des Fluges, bevorzugt kontinuierlich, erfasst wird.

15. Verfahren nach einem der Ansprüche 12-14, wobei die tatsächliche Nutzlastverteilung im Frachtraum (40) während des Beladens des Frachtraums, unmittelbar nach fertiger Beladung des Frachtraums und/oder des Flugzeugs, vor dem Start, bei Erreichen der Reiseflughöhe und/oder vor der Landung ermittelt wird.

## Claims

1. Aircraft with a cargo hold (40), said cargo hold (40) comprising a floor area, and with a system for monitoring the payload of the aircraft, wherein the system comprises at least one storage area (42) for a payload comprising the floor area of the cargo hold (40), and at least one pressure sensor (10), wherein the at least one pressure sensor (10) is configured to detect a weight and/or its center of gravity of payload resting on the storage area (42), wherein the system is configured to determine the actual payload distribution in the cargo hold (40), wherein the system is further configured to detect the weight and/or its center of gravity of payload resting on the storage area (42) immediately after completed loading of the cargo hold and/or the aircraft, prior to takeoff, upon reaching cruising altitude and prior to landing.

2. The aircraft according to claim 1, wherein the floor area in the cargo hold comprises a plurality of floor area sections (42), preferably at least three, and wherein the system comprises a plurality of pressure sensors (10) which are each assigned to the plurality of floor area sections (42), in order to detect the weight and/or its center of gravity of multiple payloads resting on the floor area sections (42), wherein one or more sensors may be assigned to one floor area section (42).

3. The aircraft according to claim 2, wherein each of the floor area sections (42) is configured to accommodate at least one cargo container.

4. The aircraft according to claim 2 or 3, wherein at least five, preferably at least ten, and particularly preferably at least fifteen floor area sections (42) are provided, each with assigned pressure sensors (10).

5. The aircraft according to one of the preceding claims, wherein the total storage area, which is equipped with pressure sensors such that a weight and/or its center of gravity of payload resting on said storage area can be detected, comprises at least 20 m², preferably at least 50 m², and particularly preferably at least 100 m².

6. The aircraft according to one of the preceding claims, wherein the system is configured to detect a weight and/or its center of gravity of payload resting on the storage area (42) during flight, preferably continuously.

7. The aircraft according to one of the preceding claims, wherein the system is configured to determine the actual payload distribution in the cargo hold (40) during loading of the cargo hold, immediately after completed loading of the cargo hold and/or the aircraft, prior to takeoff, upon reaching cruising altitude and/or prior to landing.

8. The aircraft according to one of the preceding claims, wherein the system comprises an evaluation device (16) which is configured to compare respective detected weights and/or centers of gravity with respective predetermined weights and/or centers of gravity and to output a warning signal when a maximum deviation is exceeded,
in particular wherein the evaluation device (16) is configured to compare the determined influence of the detected payload on the overall center of gravity of the aircraft with a predetermined influence of the payload on the overall center of gravity of the aircraft and to output the warning signal when a maximum influence is exceeded.

9. The aircraft according to one of the preceding claims, wherein the system comprises an evaluation device (16) which is configured to detect respective actual weights and/or their respective actual centers of gravity on the basis of the respective detected weights and/or their respective detected centers of gravity depending on an aircraft attitude.

10. The aircraft according to one of the preceding claims, wherein in the system comprises at least one pressure sensor arranged in or on a side surface laterally bounding a respective storage area (42), wherein the at least one laterally arranged sensor is configured to detect the weight and/or its center of gravity of payload supported on the side surface.

11. The aircraft according to one of the preceding claims, wherein at least one of the respective pressure sensors (10) is configured as a surface sensor, in particular as a textile surface sensor.

12. A method for operating an aircraft, in particular an aircraft according to one of claims 1 to 11, wherein at least one weight and/or its center of gravity of payload arranged on a floor area of the cargo hold (40) of the aircraft is detected and based thereon the actual payload distribution in the cargo hold (40) is determined, wherein the weight and/or its center of gravity of payload resting on the storage area (42) is detected immediately after completed loading of the cargo hold and/or the aircraft, prior to takeoff, upon reaching cruising altitude and prior to landing.

13. The method according to claim 12, wherein the floor area of the cargo hold (42) comprises a plurality of floor area sections (42), preferably at least three, and wherein for each of these floor area sections (42) at least one weight and/or its center of gravity of payload resting on the respective floor area sections (42) is detected, wherein a cargo container is located preferably on at least one, more preferably on several and particularly preferably on all of the floor area sections (42).

14. The method according to one of claims 12 to 13, wherein a weight and/or its center of gravity of payload resting on the floor area (42) is determined during flight, preferably continuously.

15. The method according to one of claims 12 to 14, wherein the actual payload distribution in the cargo hold (40) is detected during loading of the cargo hold, immediately after completed loading of the cargo hold and/or the aircraft, prior to takeoff, upon reaching cruising altitude and/or prior to landing.

## Revendications

1. Avion pourvu d'une soute (40) présentant une surface de plancher, et d'un système de surveillance de charge utile de l'avion, ledit système comportant au moins une surface de réception (42) pour une charge utile, comprenant la surface de plancher de la soute (40), et au moins un capteur de pression (10), ledit au moins un capteur de pression (10) étant prévu pour détecter un poids et/ou le centre de gravité de la charge utile reposant sur la surface de réception (42), ledit système étant adapté pour détecter la répartition de charge utile effective dans la soute (40), ledit système étant en outre adapté pour déterminer un poids et/ou le centre de gravité de la charge utile reposant sur la surface de réception (42) immédiatement après le chargement complet de la soute et/ou de l'avion, avant le décollage, une fois l'altitude de croisière atteinte, et avant l'atterrissage.

2. Avion selon la revendication 1, où la surface de plancher dans la soute comprend plusieurs zones de surface de plancher (42), de préférence au moins trois, et où le système comprend plusieurs capteurs de pression (10) associés respectivement aux différentes zones de surface de plancher (42) afin de détecter respectivement le poids et/ou le centre de gravité des charges utiles reposant sur plusieurs zones de surface de plancher (42), un ou plusieurs capteurs pouvant être affectés à une zone de surface de plancher (42).

3. Avion selon la revendication 2, où chacune des zones de surface de plancher (42) est adaptée pour recevoir au moins un conteneur de fret.

4. Avion selon la revendication 2 ou la revendication 3, où au moins cinq, avantageusement au moins dix et de préférence au moins 15 zones de surface de plancher (42) sont présentées, avec des capteurs de pression (10) associés.

5. Avion selon l'une des revendications précédentes, où la surface de réception totale, équipée de capteurs de pression de manière à permettre la détection d'un poids et/ou du centre de gravité d'une charge utile reposant sur ladite surface de réception, est d'au moins 20 m², avantageusement d'au moins 50 m² et de préférence d'au moins 100 m².

6. Avion selon l'une des revendications précédentes, où le système est adapté pour détecter, de préférence de manière continue, un poids et/ou le centre de gravité d'une charge utile reposant sur la surface de réception (42) pendant le vol.

7. Avion selon l'une des revendications précédentes, où le système est adapté pour déterminer la répartition de charge utile effective dans la soute (40) pendant le chargement de la soute, immédiatement après le chargement complet de la soute et/ou de l'avion, avant le décollage, une fois l'altitude de croisière atteinte, et avant l'atterrissage.

8. Avion selon l'une des revendications précédentes, où le système comprend un dispositif d'évaluation (16) conçu pour comparer les poids et/ou les centres de gravité détectés avec des poids et/ou des centres de gravité prédéterminés respectifs, et pour émettre un signal d'avertissement en cas de dépassement d'un écart maximal,
où le dispositif d'évaluation (16) est en particulier conçu pour comparer l'incidence de charge utile déterminée, détectée sur le centre de gravité global de l'avion, avec une incidence de charge utile prédéterminée sur le centre de gravité de l'avion, et pour émettre le signal d'avertissement en cas de dépassement d'une incidence maximale.

9. Avion selon l'une des revendications précédentes, où le système comporte un dispositif d'évaluation (16) conçu pour détecter, en fonction de la position de l'avion, les poids effectifs respectifs et/ou les centres de gravité effectifs respectifs à partir des poids détectés respectifs et/ou des centres de gravité détectés respectifs.

10. Avion selon l'une des revendications précédentes, où le système comprend au moins un capteur de pression disposé dans ou sur une surface latérale délimitant latéralement une surface de réception respective (42), ledit au moins un capteur disposé latéralement étant conçu pour détecter le poids et/ou le centre de gravité de la charge utile reposant contre la surface latérale.

11. Avion selon l'une des revendications précédentes, où au moins un des capteurs de pression (10) est conçu comme capteur de surface, en particulier comme capteur de surface textile.

12. Procédé de fonctionnement d'un avion, en particulier d'un avion selon l'une des revendications 1 à 11, où au moins un poids et/ou le centre de gravité d'une charge utile disposée sur une surface de plancher dans une soute (40) de l'avion sont détectés, et où, sur cette base, la répartition de charge utile effective dans la soute (40) est déterminée, le poids et/ou le centre de gravité de la charge utile reposant sur la surface de réception (42) étant détectés immédiatement après le chargement complet de la soute et/ou de l'avion, avant le décollage, une fois l'altitude de croisière atteinte, et avant l'atterrissage.

13. Procédé selon la revendication 12, où la surface de plancher dans la soute (42) comprend plusieurs zones de surface de plancher (42), de préférence au moins trois, et où, pour chacune de ces zones de surface de plancher (42), au moins un poids et/ou le centre de gravité d'une charge utile reposant sur la zone de surface de plancher (42) respective sont détectés, un conteneur de fret étant de préférence déposé sur au moins une, avantageusement sur plusieurs, et de préférence sur toutes les zones de surface de plancher (42).

14. Procédé selon l'une des revendications 12 à 13, où un poids et/ou le centre de gravité de la charge utile reposant sur la surface de plancher (42) sont détectés pendant le vol, de préférence de manière continue.

15. Procédé selon l'une des revendications 12 à 14, où la répartition de charge utile effective dans la soute (40) est déterminée pendant le chargement de la soute, immédiatement après le chargement complet de la soute et/ou de l'avion, avant le décollage, une fois l'altitude de croisière atteinte, et/ou avant l'atterrissage.
